# FASCICULE DE BREVET EUROPEEN

(11) **EP 1 053 529 B1**
(45) Date de publication et mention de la délivrance du brevet: **11.05.2005**
(21) Numéro de dépôt: 99901621.5
(22) Date de dépôt: 12.01.1999
(51) Int. Cl.: G06K 7/00

(54) **LECTEUR DE CARTES A MEMOIRE ELECTRONIQUE PROTEGE CONTRE LE VANDALISME**
VANDALBESTÄNDIGER ELEKTRONISCHER SPEICHERKARTENLESER
VANDAL PROOF ELECTRONIC MEMORY CARD READER

(30) Priorité: 09.02.1998 FR 9801485
(43) Date de publication de la demande: 22.11.2000
(73) Titulaire: Schlumberger Payphones S.A.S, 92120 Montrouge (FR)
(72) Inventeur: BERNARD, Alain, F-94340 Joinville le Pont (FR)
(74) Mandataire: Weihs, Bruno
(86) Numéro de dépôt international: PCT/FR1999/000042
(87) Numéro de publication internationale: WO 1999/040534

(56) Documents cités:
- EP-A- 0 348 929
- EP-A- 0 727 758
- GB-A- 2 308 213

## Description

La présente invention concerne un lecteur pour carte à mémoire électronique.

Dans la suite de la description, on entendra par lecteur un dispositif apte, non seulement à lire, mais également éventuellement à écrire des informations dans la mémoire de ladite carte à mémoire électronique.

Les carte à mémoire électronique sont maintenant bien connues. De telles cartes se composent essentiellement d'un corps de carte de forme générale rectangulaire dans lequel est implanté un module électronique. Le module électronique comprend un circuit intégré comportant au moins un circuit mémoire et des plages de contact électrique disposées sur une face du corps de carte et reliées aux bornes du circuit intégré. Pour exploiter une telle carte, on introduit celle-ci dans une machine de traitement. La machine de traitement comprend des circuits de traitement pour exploiter les informations contenues dans la mémoire de la carte et pour modifier ces informations et un lecteur qui permet d'assurer une connexion électrique temporaire entre les plages de contact de la carte et les circuits de traitement de la machine. L'établissement de cette connexion sert à alimenter le circuit intégré de la carte, à transmettre les instructions d'écriture/lecture de la mémoire de la carte, à appliquer la tension d'écriture, un signal d'horloge, etc...

Un lecteur comprend habituellement un boîtier qui comporte sur sa face avant une fente d'introduction de la carte et qui définit intérieurement un couloir de guidage servant à positionner la carte de telle manière que, lorsque celle-ci est en position de traitement, c'est-à-dire en position enfoncée, les plages de contact de la carte soient en contact électrique avec des éléments de connexion d'une tête de lecture contenant lesdits circuits de traitement. En ce qui concerne les cartes à mémoire selon la norme ISO, les plages de contact sont disposées à proximité d'un coin du corps de la carte. Le connecteur du lecteur est donc excentré par rapport à son plan médian.

Il existe plusieurs types de lecteur. Dans certains d'entre eux, la carte ne pénètre que partiellement dans le couloir de guidage lorsqu'elle est amenée en position de traitement, le déplacement de la carte pouvant être effectué, soit manuellement par l'usager, soit par un moteur entraînant un galet. Le lecteur est alors dit "sans avalement". Dans d'autres lecteurs, la carte pénètre entièrement dans le couloir de guidage pour arriver en position de traitement, le déplacement de la carte dans les deux sens étant obtenu par un moteur d'entraînement. Un tel type de lecteur de carte est décrit dans la demande de brevet européen 0 139 593 déposée au nom de la société FLONIC. Avec le deuxième type de lecteur, qui est dit "à avalement", on est sûr que le détenteur de la carte ne déplacera pas sa carte pendant le traitement de celle-ci. En revanche, si les moyens de déplacement de la carte deviennent défaillants, la carte reste bloquée dans le couloir de guidage, ce qui est dommageable pour le titulaire de la carte et pour la société gérant le lecteur puisque celle-ci devient inutilisable jusqu'à ce qu'on ait procédé à sa réparation. En outre, beaucoup d'usagers voient avec réticence leur carte entièrement avalée par le lecteur.

Avec le deuxième type de lecteur, ce risque et cette crainte n'existent pas puisqu'une partie du corps de la carte fait toujours saillie à l'extérieur du lecteur de cartes. Cependant, les deux types de lecteurs peuvent faire l'objet d'actes de malveillance visant à en interdire le fonctionnement. Un de ces actes le plus fréquent consiste dans l'introduction dans le couloir de guidage du lecteur d'une partie d'un corps de carte authentique mais qui a été coupé de telle manière que sa longueur soit un peu inférieure à la longueur du couloir de guidage, dans le cas d'un lecteur du premier type, et un peu inférieure à la course de la carte dans le cas d'un lecteur du deuxième type. Dans les deux cas, les usagers se présentant après l'accomplissement de cet acte de malveillance ne pourront pas utiliser le lecteur puisque la portion de corps de carte, constituant ce qu'on appellera une fausse carte, ne peut pas être extraite du couloir de guidage. Cela nécessite l'intervention d'une équipe de maintenance et interdit le fonctionnement du lecteur pour un temps non négligeable.

EP-A-0 348 929 divulgue un lecteur pour carte à mémoire comprenant les caractéristiques dans le préambule de la revendication 1.

Aussi, le problème technique à résoudre par l'objet de la présente invention est de fournir un lecteur pour carte à mémoire électronique comprenant un corps de carte et des plages de contact électrique disposées sur une face dudit corps de carte, lecteur qui permettrait d'empêcher les actes de vandalisme précités ou du moins de les rendre plus difficiles.

La solution au problème technique posé consiste, selon la présente invention, en un lecteur pour carte à mémoire électronique comprenant un corps de carte et des plages de contact électrique disposées sur une face dudit corps de carte, ledit lecteur comprenant :
- une tête de lecture présentant des éléments de connexion destinés à entrer en contact électrique avec lesdites plages de contact de la carte à mémoire électronique, lesdits éléments de connexion définissant un plan, dit plan de référence,
- une fente d'insertion située dans ledit plan de référence,
- des moyens de guidage en translation de ladite carte le long du plan de référence selon une direction de translation donnée,
- une butée pour le corps de carte, définissant, en fin de translation, une position de traitement de la carte dans laquelle les plages de contact électrique de la carte sont aptes à entrer en contact avec les éléments de connexion de la tête de lecture,
- une pièce mobile en rotation autour d'un axe, cet axe étant sensiblement perpendiculaire à la direction de translation, caractérisé en ce que ladite pièce mobile est normalement retenue en position fermée contre ladite tête de lecture par des moyens de fermeture, et en ce que ladite pièce mobile est apte, d'une part, à assurer le contact électrique entre les éléments de connexion de la tête de lecture et les plages de contact de la carte en position de traitement, sous l'action d'une force de fermeture mise en oeuvre par lesdits moyens de fermeture pour permettre d'appliquer la carte contre la tête de lecture, et, d'autre part, à s'écarter de ladite position fermée sous l'action d'une force développée, à l'encontre de ladite force de fermeture, par la carte en mouvement selon ladite direction de translation, pour que la carte puisse s'insérer entre ladite pièce mobile et ladite tête de lecture.

Comme on le verra en détail plus loin, le lecteur conforme à l'invention permet de remédier aux différents cas de vandalisme par insertion de fausses cartes. Pour ce qui est des fausses cartes dont la longueur est trop courte, elles tomberont dans le fond du lecteur avant d'avoir atteint ladite pièce mobile en position fermée. Pour celles, plus longues, qui pourront être reçues par la pièce mobile, elles seront éjectées sous l'action d'une carte authentique insérée subséquemment.

La description qui va suivre, en regard des dessins annexés donnés à titre d'exemples non limitatifs, fera bien comprendre en quoi consiste l'invention et comme elle peut être réalisée.
La figure 1 est une vue en perspective de dessus d'un lecteur de cartes à mémoire électronique, conforme à l'invention.
La figure 2 est une vue en perspective de dessous du lecteur de la figure 1.
La figure 3 est une vue de côté en coupe selon la ligne B-B de la figure 1 du lecteur des figures 1 et 2.
La figure 4 est une vue en perspective d'un connecteur pour une tête de lecture du lecteur des figures 1, 2 et 3.
La figure 5 est une vue en perspective d'une carte à mémoire électronique destinée à être introduite dans le lecteur des figures 1, 2 et 3.

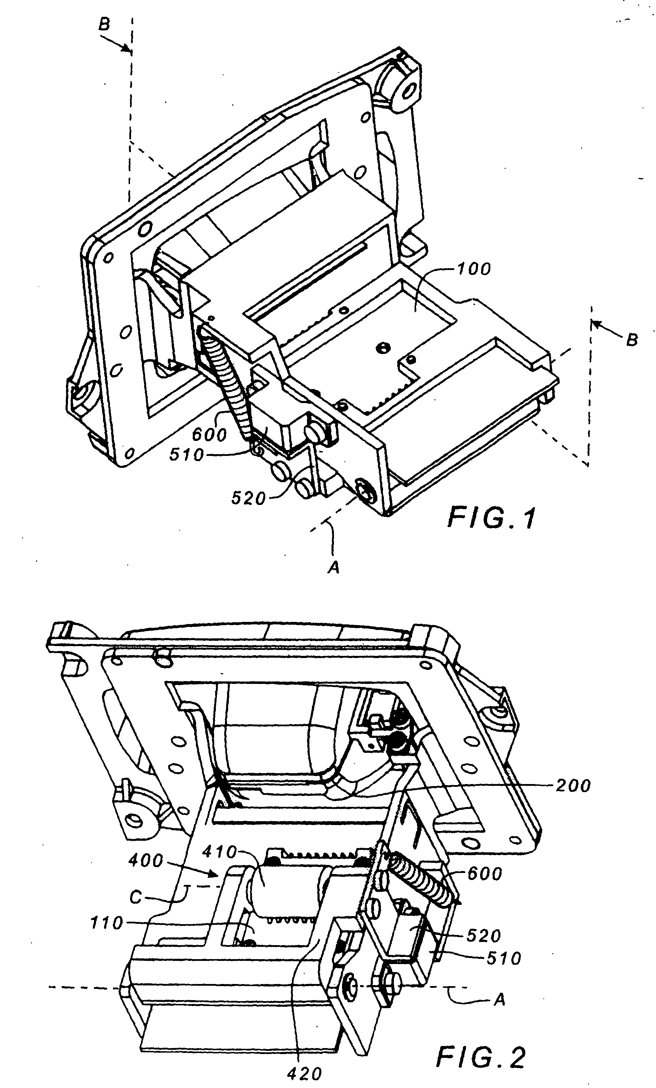

Sur les figures 1, 2 et 3 est représenté un lecteur prévu pour lire et/ou écrire des informations dans une carte à mémoire électronique, par exemple une carte téléphonique pour téléphone public. Comme l'indique la figure 5, ladite carte 10 à mémoire électronique comprend un corps 11 de carte en matière plastique et des plages 12 de contact disposées sur une face dudit corps 11 de carte. Les plages 12 de contact sont électriquement reliées à un circuit intégré, ou puce, noyé dans le corps 11 de carte et contenant au moins un circuit mémoire.

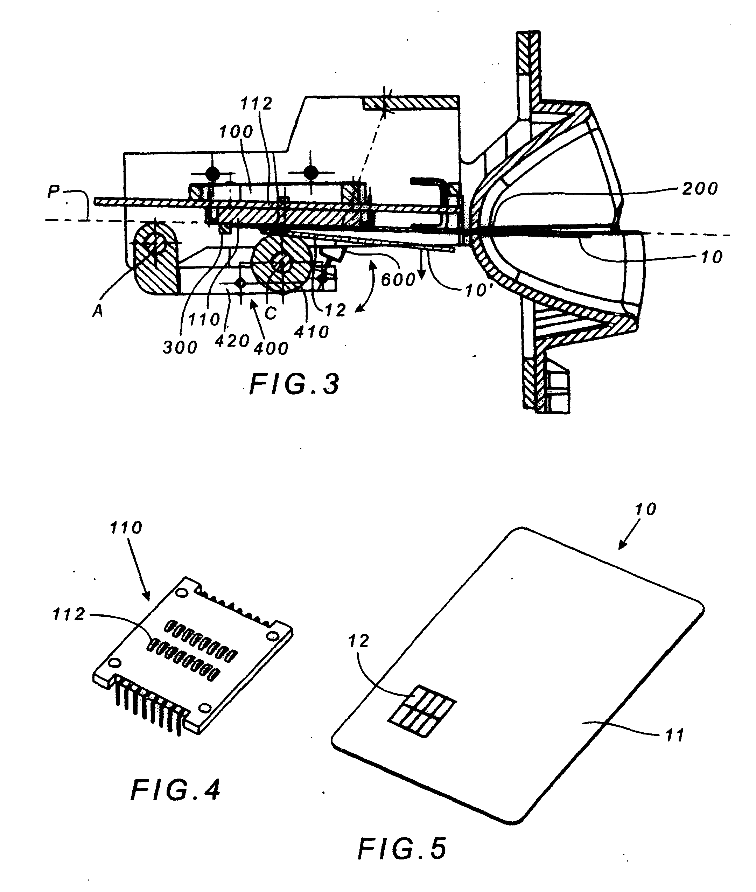

De son côté, le lecteur comporte une tête 100 de lecture dont la fonction est d'échanger des informations en lecture et/ou écriture avec le circuit mémoire de la carte 10. A cet effet, ladite tête 100 de lecture comprend un connecteur 110 présentant des éléments 112 de connexion destinés à entrer en contact électrique avec les plages 12 de contact de la carte 10. On observera sur la figure 4 que le connecteur 110 de la tête 100 de lecture comporte deux fois huit éléments 112 de connexion, ceci afin de permettre la lecture de tous les types de carte à mémoire électronique, sachant que les plages 12 de contact peuvent être situées en deux emplacements voisins différents sur le corps 11 de carte. Sur la figure 3, on peut voir que les éléments 112 de connexion définissent un plan P, dit plan de référence.

Par ailleurs, ledit lecteur pour carte à mémoire électronique comprend une fente 200 d'insertion placée dans le plan P de référence, à travers laquelle l'utilisateur glisse sa carte 10 jusqu'à ce que, grâce à des moyens de guidage en translation de ladite carte 10 dans le plan P de référence, la carte 10 atteigne une butée 300 pour le corps 11 de carte, qui définit, en fin d'insertion, une position de traitement dans laquelle les plages 12 de contact électrique de la carte sont aptes à entrer en contact avec les éléments 112 de connexion de la tête 100 de lecture.

Dans le mode de réalisation représenté aux figures 1, 2 et 3, lesdits moyens de guidage sont constitués du fait que la fente 200 d'insertion est étagée dans le plan P de référence, formant par exemple sensiblement un U dans ledit plan de référence.

Lorsqu'elle arrive en position de traitement, la carte 10 est reçue par une pièce 400 mobile en rotation autour d'un axe A sensiblement perpendiculaire à la direction de translation correspondant à l'insertion de la carte 10. Dans l'exemple des figures 1, 2 et 3, ladite pièce 400 est constituée d'un étrier 420 mobile autour de l'axe A et portant un rouleau 410 monté rotatif autour de son propre axe C.

Quand la pièce mobile 400 est en position fermée, comme représenté sur la figure 3, le rouleau 410, situé alors au niveau de la zone de contact électrique entre la carte 10 et la tête 100 de lecture, vient assurer le contact électrique entre les éléments 112 de connexion et les plages 12, ceci à l'aide de moyens d'application de la carte 10 contre la tête 100 de lecture. Dans le cas montré aux figures 1, 2 et 3, lesdits moyens d'application sont constitués par des moyens d'attraction magnétique composés d'un aimant 510, solidaire du lecteur, et d'une pièce polaire 520, fixée sur l'étrier 420 et donc solidaire du rouleau 410 de la pièce mobile 400. On comprend que l'attraction magnétique de l'aimant 510 sur la pièce polaire 520 maintient le rouleau 410 en position fermée, ce qui a pour effet d'appliquer la carte 10 contre la tête 100 de lecture et donc de favoriser le contact électrique entre les éléments 112 de connexion et les plages 12 de contact.

On peut voir plus particulièrement sur la figure 3 que le lecteur conforme à l'invention est tel que pour un acte de vandalisme consistant à introduire une fausse carte dont la longueur est sensiblement inférieure à la distance entre la fente 200 d'insertion et la pièce mobile 400 en position fermée, ladite fausse carte tombera au fond du lecteur sous l'effet de son propre poids car elle aura quitté définitivement la fente 200 d'insertion avant d'avoir été reçue par le rouleau 410 de ladite pièce mobile en position fermée. Dans ce cas, l'acte de vandalisme n'a aucun effet néfaste sur l'utilisation du lecteur.

Pour une fausse carte dont la longueur est supérieure à la distance fente 200 d'insertion-pièce mobile 400 en position fermée, sans que bien entendu, elle ne dépasse de la fente d'insertion car elle serait alors accessible et pourrait être retirée par l'utilisateur suivant sans causer de préjudice, ladite fausse carte 10' peut se trouver en position de traitement ou au moins appliquée contre la tête de lecture par lesdits moyen 510, 520 d'application, ceci sans dépasser la fente 200 d'insertion comme montré sur la figure 3. Dans cette position, la fausse carte 10' ne peut être dégagée manuellement et constitue un réel obstacle à l'insertion suivante d'une carte 10 authentique. Le lecteur, objet de l'invention, permet néanmoins de remédier à cette situation. En effet, du fait qu'elle se trouve en porte à faux, n'étant maintenue qu'à une des ses extrémités, la fausse carte 10' présente, sous l'effet de son propre poids, un angle avec le plan P de référence, dirigé vers le fond du lecteur, ce qui a pour effet qu'une carte 10 authentique introduite par la suite est insérée suivant le plan P de référence, donc au-dessus de la fausse carte 10' et peut donc, en tout état de cause, venir en position de traitement malgré la présence de la fausse carte 10'. L'insertion de la carte 10 authentique, par dessus une fausse carte 10', peut encore être facilitée si ledit plan P de référence présente, ainsi que l'indique la figure 3, une pente montante dans la direction d'insertion.

En outre, la carte 10 authentique est en mesure de développer une force tendant à écarter la pièce mobile 400 de sa position fermée en luttant contre les moyens 510, 520 d'application du rouleau 410 de la pièce mobile 400 contre la tête 100 de lecture. Cette force peut provenir de la surépaisseur due à la superposition des deux cartes 10, 10' et à la courbure que peut affecter la carte 10 authentique arrivant contre la butée 300 sous l'effet de flexion résultant de la force d'insertion exercée par l'utilisateur. A ce moment, les moyens 510, 520 d'attraction magnétique cèdent, laissant le rouleau 410 de la pièce mobile 400 s'écarter de sa position fermée et la fausse carte 10' tomber dans le fond du lecteur, jusqu'à ce qu'un ressort 600 de rappel, mis en traction dans le mouvement d'ouverture de l'étrier 420 de la pièce mobile, ramène ladite pièce mobile 400 dans sa position fermée, les moyens 510, 520 d'attraction magnétique exerçant à nouveau leur action d'application de la pièce mobile contre la tête 100 de lecture.

## Revendications

1. Lecteur pour carte (10) à mémoire électronique comprenant un corps (11) de carte et des plages (12) de contact électrique disposées sur une face dudit corps (11) de carte, ledit lecteur comprenant :
- une tête (100) de lecture présentant des éléments (112) de connexion destinés à entrer en contact électrique avec lesdites plages (12) de contact de la carte (10) à mémoire électronique, lesdits éléments (112) de connexion définissant un plan, dit plan (P) de référence,
- une fente (200) d'insertion située dans ledit plan (P) de référence,
- des moyens de guidage en translation de ladite carte (10) le long du plan (P) de référence selon une direction de translation donnée,
- une butée (300) pour le corps de carte, définissant, en fin de translation, une position de traitement de la carte (10) dans laquelle les plages (12) de contact électrique de la carte sont aptes à entrer en contact avec les éléments (112) de connexion de la tête (100) de lecture,
- une pièce (400) mobile en rotation autour d'un axe (A), cet axe étant sensiblement perpendiculaire à la direction de translation, **caractérisé en ce que** ladite pièce mobile est normalement retenue en position fermée contre ladite tête de lecture par des moyens de fermeture (510, 520, 600), et **en ce que** ladite pièce mobile est apte, d'une part, à assurer le contact électrique entre les éléments de connexion de la tête (100) de lecture et les plages (12) de contact de la carte (10) en position de traitement, sous l'action d'une force de fermeture mise en oeuvre par lesdits moyens de fermeture pour permettre d'appliquer la carte (10) contre la tête (100) de lecture, et, d'autre part, à s'écarter de ladite position fermée sous l'action d'une force développée, à l'encontre de ladite force de fermeture, par la carte (10) en mouvement selon ladite direction de translation, pour que la carte puisse s'insérer entre ladite pièce mobile et ladite tête de lecture.

2. Lecteur selon la revendication 1, **caractérisé en ce que** lesdits moyens de fermeture comprennent des moyens (510, 520) d'attraction magnétique.

3. Lecteur selon l'une des revendications 1 ou 2, **caractérisé en ce que** lesdits moyens de fermeture comprennent un ressort (600) de rappel.

4. Lecteur selon l'une quelconque des revendications 1 à 3, **caractérisé en ce que** ledit plan (P) de référence présente une pente montante dans la direction d'insertion.

5. Lecteur selon l'une quelconque des revendications 1 à 4, **caractérisé en ce que** lesdits moyens de guidage sont constitués par une fente (200) d'insertion étagée dans le plan (P) de référence.

6. Lecteur selon l'une quelconque des revendications 1 à 5, **caractérisé en ce que** ladite pièce mobile est constituée d'un étrier (420) mobile autour dudit axe (A) et portant un rouleau (410) monté rotatif autour de son propre axe (C), ledit rouleau (410) étant destiné à venir en appui contre ladite tête de lecture (100).

7. Lecteur selon l'une quelconque des revendications 1 à 6, **caractérisé en ce que** ladite pièce mobile est conformée pour venir en appui contre une extrémité de la carte lorsque ladite carte est en position de traitement.

## Patentansprüche

1. Lesegerät für eine elektronische Speicherkarte (10) mit einem Kartenkörper (11) und elektrischen Kontaktbereichen (12), die auf einer Seite des Kartenkörpers (11) angeordnet sind, wobei das Lesegerät folgendes umfasst:
- einen Lesekopf (100), der Verbindungselemente (112) aufweist, die in elektrischen Kontakt mit den Kontaktbereichen (12) der elektronischen Speicherkarte (10) kommen sollen, wobei die Verbindungselemente (112) eine Ebene, die so genannte Referenzebene (P), definieren,
- einen Einführschlitz (200) der in der Referenzebene (P) liegt,
- Mittel zur translatorischen Führung der Karte (10) entlang der Referenzebene (P) in einer gegebenen Translationsrichtung,
- einen Anschlag (300) für den Kartenkörper, der am Ende der Translation eine Verarbeitungsposition der Karte (10) definiert, in der die elektrischen Kontaktbereiche (12) der Karte in der Lage sind, in Kontakt mit den Verbindungselementen (112) des Lesekopfs (100) zu kommen,
- ein um eine Achse (A) drehbewegliches Teil (400), wobei diese Achse im Wesentlichen senkrecht zur Translationsrichtung ist,
**dadurch gekennzeichnet, dass** das bewegliche Teil normalerweise durch Schließmittel (510, 520, 600) in einer geschlossenen Position am Lesekopf gehalten wird, und dass das bewegliche Teil in der Lage ist, einerseits unter der Wirkung einer Schließkraft, die durch die Schließmittel ausgeübt wird, um das Anlegen der Karte (10) an dem Lesekopf (100) zu erlauben, für den elektrischen Kontakt zwischen den Verbindungselementen des Lesekopfs (100) und den Kontaktbereichen (12) der Karte (10) in der Verarbeitungsposition zu sorgen, und andererseits sich aus der geschlossenen Position unter der Wirkung einer zu der Schließkraft entgegengesetzten und durch die Karte (10) bei der Bewegung in der Translationsrichtung entwickelten Kraft zu entfernen, damit die Karte zwischen das bewegliche Teil und den Lesekopf eingeschoben werden kann.

2. Lesegerät nach Anspruch 1, **dadurch gekennzeichnet, dass** die Schließmittel Mittel (510, 520) mit magnetischer Anziehung umfassen.

3. Lesegerät nach Anspruch 1 oder 2, **dadurch gekennzeichnet, dass** die Schließmittel eine Rückstellfeder (600) umfassen.

4. Lesegerät nach einem der Ansprüche 1 bis 3, **dadurch gekennzeichnet, dass** die Referenzebene (P) eine in Einschubrichtung ansteigende Neigung aufweist.

5. Lesegerät nach einem der Ansprüche 1 bis 4, **dadurch gekennzeichnet, dass** die Führungsmittel aus einem in der Referenzebene (P) stufenförmig angeordneten Einführschlitz (200) bestehen.

6. Lesegerät nach einem der Ansprüche 1 bis 5, **dadurch gekennzeichnet, dass** das bewegliche Teil aus einem um die Achse (A) beweglichen Bügel (420) besteht, der eine Walze (410) trägt, die um ihre eigene Achse (C) drehbeweglich ist, wobei die Walze (410) an dem Lesekopf (100) zur Anlage kommen soll.

7. Lesegerät nach einem der Ansprüche 1 bis 6, **dadurch gekennzeichnet, dass** das bewegliche Teil so ausgebildet ist, dass es an einem Ende der Karte zur Anlage kommt, wenn die Karte in der Verarbeitungsposition ist.

## Claims

1. Smart card reader (10) comprising a card body (11) and electrical contact areas (12) disposed on a face of the said card body (11), the said reader comprising:
- a read head (100) having connection elements (112) intended to enter into electrical contact with the said contact areas (12) of the smart card (10), the said connection elements (112) defining a plane, known as the reference plane (P),
- an insertion slot (200) situated in the said reference plane (P),
- means of guidance in translation of the said card (10) along the reference plane (P) in a given direction of translation,
- a stop (300) for the card body, defining, at the end of translation, a position of processing of the card (10) in which the electrical contact areas (12) of the card are suitable for making contact with the connection elements (112) of the read head (110),
- a piece (400) that can rotate about an axis (A), this axis being substantially perpendicular to the direction of translation, **characterized in that** the said mobile piece is normally retained in closed position against the said read head by closure means (510, 520, 600), and **in that** the said mobile piece is suitable, on the one hand, for providing the electrical contact between the connection elements of the read head (100) and the contact areas (12) of the card (10) in processing position, under the action of a closure force applied by the said closure means in order to allow the card (10) to be pressed against the read head (100), and, on the other hand, for moving away from the said closed position under the action of a force developed, contrary to the said force of closure, by the card (10) in movement in the said direction of translation, so that the card can be inserted between the said mobile piece and the said read head.

2. Reader according to Claim 1, **characterized in that** the said closure means comprise magnetic attraction means (510, 520).

3. Reader according to one of Claims 1 or 2, **characterized in that** the said closure means comprise a return spring (600).

4. Reader according to any one of Claims 1 to 3, **characterized in that** the said reference plane (P) has a slope rising in the direction of insertion.

5. Reader according to any one of Claims 1 to 4, **characterized in that** the said guidance means consist of an insertion slot (200) tiered in the reference plane (P).

6. Reader according to any one of Claims 1 to 5, **characterized in that** the said mobile piece consists of a yoke (420) that can move about the said axis (A) and supports a roll (410) mounted to rotate about its own axis (C), the said roll (410) being intended to press against the said read head (100).

7. Reader according to any one of Claims 1 to 6, **characterized in that** the said mobile piece is formed so as to press against one end of the card when the said card is in processing position.
